# EUROPEAN PATENT SPECIFICATION

(11) **EP 2 431 619 B1**
(45) Date of publication and mention of the grant of the patent: **03.05.2017**
(21) Application number: 10774581.2
(22) Date of filing: 24.03.2010
(51) Int. Cl.: F16B 5/02, F16B 39/24, F16B 35/04

(54) **SYSTEM FOR THE DETACHABLE CONNECTION OF THICK PARTS**
SYSTEM FÜR DIE LÖSBARE VERBINDUNG DICKER TEILE
SYSTÈME D'ASSEMBLAGE DÉMONTABLE DE PIÈCES DE GRANDE ÉPAISSEUR

(30) Priority: 13.05.2009 ES 200930162
(43) Date of publication of application: 21.03.2012
(73) Proprietor: Airbus Operations, S.L., 28906 Getafe Madrid (ES)
(72) Inventor: BALSA GONZÁLEZ, Alberto, E-28341 Valdemoro (Madrid) (ES); INIESTA MENÉNDEZ, José Gregorio, E-28902 Getafe (Madrid) (ES)
(74) Representative: ABG Patentes, S.L.
(86) International application number: PCT/ES2010/070172
(87) International publication number: WO 2010/130854

(56) References cited:
- DE-A1-102005 029 529
- DE-U1- 20 208 960
- US-A- 2 537 527
- US-A- 4 304 503
- US-A- 4 690 365
- US-A- 5 967 723

## Description

### OBJECT OF THE INVENTION

The present invention relates to a system for the detachable union of large thickness pieces in which one starts with at least two superimposed pieces to be joined which are in contact via one of their faces, in such a way that we just have access to the system of union via one of the free faces of one of the pieces, while via the free face of the other piece of the pair we do not have access to the system of union.

So, the object of the invention is to achieve a completely reliable union between the two superimposed pieces in question in order to prevent said pieces from becoming separated in relation to each other, this objective being achieved by means of the characteristic system of union.

It is a safe system that prevents the union from coming loose during its useful life.

### BACKGROUND OF THE INVENTION

When two or more pieces need to be joined in which no access can be had to the inner part of the assembly to fit, the most usual solution is to use rivets of the kind known as blind rivets" or "Jo-bolts", which only require access from one of the pieces to be fitted in order to be able to be installed.

The problem arises when the pieces to to be joined have a thickness that is too great, since this type of "blind" rivet has a limited length; and when it wished to detach the pieces to to be joined in the future, then the only way to do this is by breaking them or drilling them, which are operations that entail damage and deterioration of the housings for the rivets.

Moreover, it can be pointed out that there currently exist conical washers for providing permanent stresses in the direction of the tightening screws used in the union between nut and screw with the aim of preventing loss of preload in that union.

US2537527 relates to a non-loosening safety bolt designed to be used in any device where it is desirable to prevent the bolt from loosening, according to the preamble of claim 1.

### DESCRIPTION OF THE INVENTION

With the aim of achieving the objectives and avoiding the drawbacks mentioned in the above sections, the invention proposes a system for detachable union of large thickness pieces according to claim 1.

In this system one starts with two pieces to to be joined (top and bottom) that are in contact with each other via one of their faces, in such a way that once the union has been made access is had to the system of union via one of the free faces of one of the pieces (upper) while access to said union via the free face of the other piece of the pair (lower) is not possible.

To achieve this, the system of union starts with a bolt with threaded end segments, one of which is coupled in a threaded blind hole of the lower piece, immobilizing said bolt in that thread thanks to an annular extension incorporated by it and above all thanks to a characteristic elastic washer that is inserted between that annular extension and the inner face of the lower piece, on which inner face the threaded blind hole has been made, said elastic washer being the element that is going to prevent the bolt from coming undone.

The annular extension separates an upper section from another lower section of the bolt.

The lower section comprises a narrow segment corresponding to the location of the washer and the threaded segment for being coupled in the blind hole of the lower piece.

On the other hand, the upper section comprises a length that exceeds the thickness of the upper piece and includes a threaded end segment, in such a way that the end section of the bolt will be housed in a through hole of the upper piece, with the union finally being ensured by means of a self-locking nut coupled in the threaded end of the upper section of the said bolt, and at the same time the said nut will press against the free face of the upper piece, thereby ensuring a stable and secure union between the two pieces.

Conventionally, once the bolt has been fitted on the lower piece without the incorporation of the characteristic elastic washer, we would then fit the other upper piece securing the assembly with the self-locking nut on the threaded free segment of the bolt, securing just the threaded end of the bolt corresponding to the upper piece, while the threaded union of the bolt on the blind hole of the lower piece would not be secured, so that any vibrations or forces to which the assembly of the two joined pieces is subjected could cause that threaded union of the blind hole to come loose and give rise to maladjustments and slackening, and therefore possible accidents.

On the other hand, in the invention that we are concerned with, the characteristic elastic washer is a somewhat special piece which, once fitted in the inventive system, exerts an additional pressure and thrust in the axial direction between both threaded couplings, in such a way that it counteracts any load or vibration that could cause that bolt to come loose.

So, the elastic washer has a certain characteristic geometry and is made of a material that at all times works under an elastic regime (which does not undergo plastic deformations in the range of stresses to which it is going to be subjected). Depending on each case, it can be made of a metal material or even a plastic material.

Its special geometry will mean that, when the piece is deformed elastically, it will always tend to recover its initial shape by introducing the additional pressure that we seek.

Depending on the type of union, load or stress, the type of material chosen, etc., one can adjust the angle of opening of some lugs incorporated into the washer, the number of these lugs, their geometry, etc. The fact is that the piece constituting the washer can be deformed and at all times tends to recover its initial shape.

The tightening of the bolt will deform the special piece constituting the washer and will prevent it from regaining its initial shape. As the special piece constituting the washer is elastic, it will always want to return to its initial position, generating a reaction force on the central part of the bolt which will prevent the latter from coming loose in its coupling in the blind hole.

Once the washer in question has been fitted, it is placed on top of the part we wish to join and we fit a self-locking nut via the upper threaded segment of the bolt via which we have access, as referred to above.

Moreover, in cases in which an additional pressure is needed which the deformation itself of the washer is not able to provide us with, the washer in question can be provided with a certain geometry that increases the friction in the zone of union and prevents the bolt from turning.

This geometry can consist of making the part in contact with the bolt rough in order to increase the resistance to turning, and on the other hand it can consist of creating some notches or teeth in the lugs of the washer that stick into the piece to be joined and also help to prevent the bolt from turning.

In this way we could achieve an extra security in the fixing of the bolt, something that we cannot achieve with any conventional conical washer.

Furthermore, this method of union also allows us to know in a certain way the tightening torque that we are giving to the bolt when we fit it in the lower piece. The washer itself will allow us to control the tightening torque.

Below, in order to facilitate a better understanding of this descriptive specification and forming an integral part thereof, some figures are attached in which the object of the invention has been represented by way of illustration and non-limiting.

### BRIEF DESCRIPTION OF THE DRAWINGS

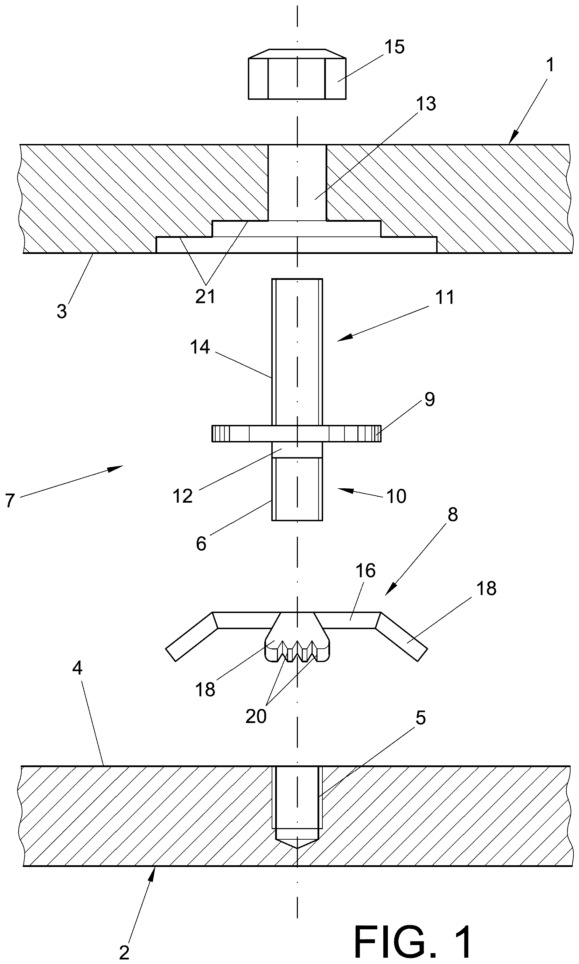

**Figure 1****.-** Shows an exploded view of the system for the detachable union of large thickness pieces, the inventive object. It incorporates a characteristic piece by way of an elastic washer which, together with a self-locking nut, ensures the immobilization of the system of the invention.

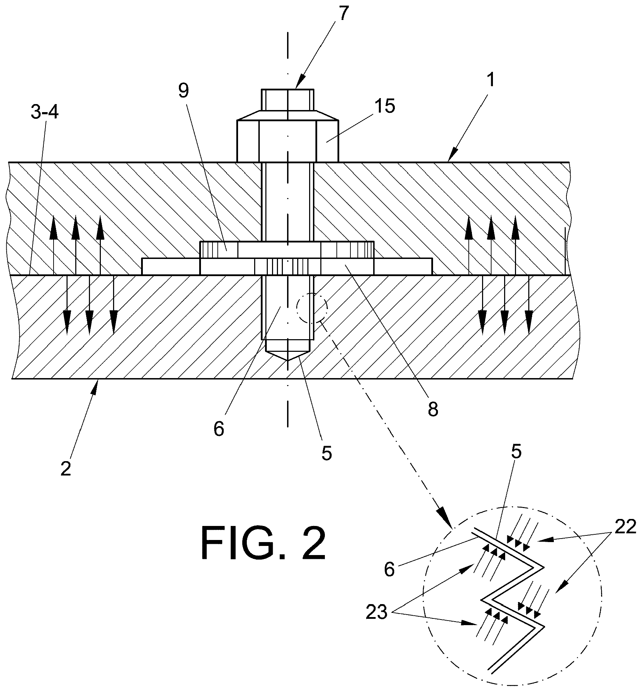

**Figure 2****.-** Shows a view in cross-section of the system for the detachable union of the invention in the assembled position.

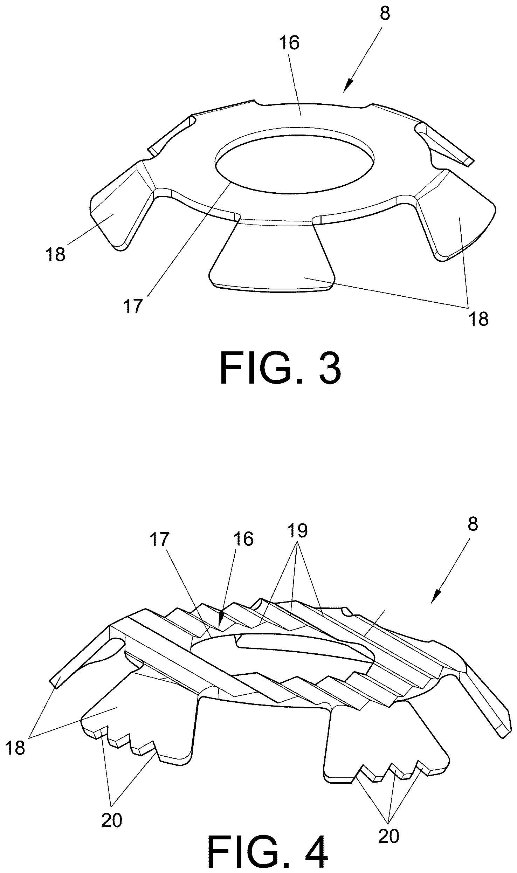

**Figures 3 and 4****.-** Shows some perspective views of the characteristic pieces by way of elastic washers mentioned above.

### DESCRIPTION OF THE PREFERRED FORM OF EMBODIMENT

Considering the numbering adopted in the figures, the system for the detachable union of large thickness pieces is intended for joining two pieces, an upper one 1 and another lower one 2 that are in direct contact via their respective inner faces 3 and 4 of those two pieces 1 and 2, in such a way that the inner face 4 of the lower piece 2 contains a blind hole 5, provided with a thread for coupling a first threaded end segment 6 of a bolt 7 with the interposition of a characteristic elastic washer 8 which makes contact against that inner face 4 of the lower piece 2 and also makes contact on an annular extension 9 integral with the bolt itself 7, thereby ensuring the immobilization of the bolt 7 on the lower piece 2. So, the annular extension 9 separates a lower section 10 corresponding to the lower piece 2 and an upper section 11 which corresponds to the upper piece 1 .

The elastic washer 8 is coupled to the bolt 7 in correspondence with a short intermediate segment 12 of the bolt 7 limited between the annular extension 9 and the start of the first threaded end segment 6.

Moreover, the upper piece 1 incorporates at least one through hole 13 housing the upper section 11 of the bolt 7, this section incorporating a second threaded end segment 14 of the bolt 7 which projects via the free face of the upper piece 1, with a self-locking nut 15 being coupled in that threaded segment 14 which nut 15 will press against the free face of the upper piece 1, thereby ensuring a correct and immovable union between the two pieces 1 and 2.

Furthermore, the elastic washer 8 has a characteristic structure that comprises a centered annular body 16 which limits a central hole 17 via which the bolt 7 is introduced along with some inclined radial flaps 18 pointing downwards, with the outermost free ends of said flaps 18 resting on the inner face 4 of the lower piece 2, while the annular extension 9 of the bolt 7 rests on the upper surface of the annular body 16 of the elastic washer 8.

This upper surface of the washer 8 that is in contact with the annular extension 9 can incorporate a rough surface, defined for example by a profile in the form of a triangular wave 19, thereby achieving a more reliable immobilization of the bolt 7, preventing it from turning in the direction of coming loose.

In turn, the radial flaps 18 can also incorporate some teeth or notches 20 which permit a more reliable grip of the elastic washer 8 on the inner face 4 of the lower piece 2.

Once the bolt 7 is immobilized, the elastic washer 8 maintains its elasticity and therefore maintains its thrust and pressure in the axial direction in order to ensure the immobilization of the bolt 7 in the event of possible vibrations and other external effects tending to loosen the bolt 7.

The inner face 3 of the upper piece 1 incorporates a staggered coaxial recess or hollow 21 for permitting the housing of the annular extension 9 and of the elastic washer 8.

The forces of action 23 and reaction 22 that are generated between the threads of the threaded end segment 6 of the bolt 7 and the threading of the blind hole 5 due to the axial pressure exerted by the elastic washer 8 ensure the prevention of rotation of the bolt 7 in the direction of coming loose.

## Claims

1. **A DETACHABLE JOINT** for coupling large thickness pieces, comprising:
a bolt (7) having: a first section with a first threaded end segment (6); a second section with a second threaded end segment (14); and an intermediate annular extension (9) between said first and second sections, for limiting the tightening rotation of the bolt (7);
a first piece (2) to be joined, with an inner face (4) and a threaded blind hole (5) threadedly connected to the first threaded end segment (6) of the bolt (7);
a second piece (1) to be joined, having a through hole (13) connected to the second threaded end segment (14) of the bolt (7) in which is coupled a nut (15), and
anti-rotation means of the bolt in its threaded coupling in the blind hole (5) of the first piece (2), wherein said means consists of an intermediate piece (8) coupled to the bolt (7),
**characterized in that**,
the nut (15) coupled to the second threaded end segment (14) of the bolt (7) is a self-locking nut (15),
the second piece (1) to be joined, further having a coaxial space (21) being defined around the bolt (7) in correspondence with the inner faces of the two pieces to be joined, and the intermediate piece (8) coupled to the bolt (7) is arranged between the intermediate annular extension (9) of the bolt (7) and the inner face (4) of the first piece (2).

2. **THE DETACHABLE JOINT** according to claim 1, wherein the intermediate piece is an elastic washer (8) comprising an annular body (16) on one of the faces of which rests the annular extension (9) of the bolt (7), with some inclined radial flaps (18) projecting from the edge of said annular body (16), these flaps (18) seating via their outermost free edges on the inner face of the first piece to be joined (2).

3. **THE DETACHABLE JOINT** according to claim 2, wherein the contact face of the annular body (16) of the elastic washer (8) incorporates a rough surface with a high degree of friction against the annular extension (9) of the bolt (7).

4. **THE DETACHABLE JOINT** according to claim 3, wherein the rough surface of the contact face of the elastic washer (8) presents a narrow profile in the form of a triangular wave.

5. **THE DETACHABLE JOINT** according to any one of claims 2 to 4, wherein the outermost free edge of the inclined radial flaps (18) incorporates a plurality of teeth-shaped notches (20) with a greater degree of grip and friction on the inner face (4) of the first piece to be joined (2) which incorporates the blind hole (5).

6. **THE DETACHABLE JOINT** according to any one of preceding claims, wherein between the first threaded segment (6) of the bolt (7) and the annular extension (9) of that same bolt (7) there exists a short intermediate segment that corresponds to the location of the elastic washer (8).

## Patentansprüche

1. Lösbare Verbindung für die Kopplung von Teilen großer Dicke, umfassend:
einen Gewindebolzen (7), der verfügt über: einen ersten Abschnitt mit einem ersten Gewindeendsegment (6); einen zweiten Abschnitt mit einem zweiten Gewindeendsegment (14); und eine im Zwischenbereich befindliche ringförmige Erweiterung (9), zwischen dem ersten und dem zweiten Abschnitt, um eine Drehung beim Festziehen des Gewindebolzens (7) zu begrenzen;
ein erstes zu verbindendes Teil (2) mit einer Innenfläche (4) und einem Gewindesackloch (5), das mit dem ersten Gewindeendsegment (6) des Gewindebolzens verschraubt ist;
ein zweites zu verbindendes Teil (1), das ein Durchgangsloch (13) hat, das mit dem zweiten Gewindeendabschnitt (14) des Gewindebolzens (7) verbunden ist, der mit einer Mutter (15) befestigt wird, und
eine Antidreheinrichtung des Gewindebolzens in seiner Gewindeverbindung in dem Sackloch (5) des ersten Teils (2), wobei die Einrichtung aus einem Zwischenstück (8) besteht, das mit dem Gewindebolzen (7) verbunden ist,
**dadurch gekennzeichnet, dass**
die Mutter (15), die mit dem zweiten Gewindeendsegment (14) des Gewindebolzens (7) verbunden ist, eine selbstsichernde Mutter (15) ist,
das zweite zu verbindende Teil (1) weiterhin einen koaxialen Zwischenraum (21) hat, der um den Gewindebolzen (7) herum in Entsprechung mit den Innenflächen der beiden zu verbindenden Teile definiert ist, und
das Zwischenstück (8), das mit dem Gewindebolzen (7) verbunden ist, zwischen der im Zwischenbereich befindlichen ringförmigen Erweiterung (9) des Gewindebolzens (7) und der Innenfläche (4) des ersten Teils (2) angeordnet ist.

2. Lösbare Verbindung nach Anspruch 1, bei der das Zwischenstück eine elastische Beilegscheibe (8) ist, die einen ringförmigen Körper (16) auf einer der Flächen umfasst, die auf der ringförmigen Erweiterung (9) des Gewindebolzens (7) ruht, wobei einige geneigte radiale Klappen (18) von dem Rand des ringförmigen Körpers (16) hervorragen, wobei diese Klappen (18) an ihren äußersten freien Rändern auf der Innenfläche des ersten zu verbindenden Teils (2) ruhen.

3. Lösbare Verbindung nach Anspruch 2, bei der die Kontaktfläche des ringförmigen Körpers (16) der elastischen Beilegscheibe (8) eine raue Oberfläche mit einem hohen Reibungsgrad gegenüber der ringförmigen Erweiterung (9) des Gewindebolzens (7) umfasst.

4. Lösbare Verbindung nach Anspruch 3, bei der die raue Oberfläche der Kontaktfläche der elastischen Beilegscheibe (8) ein enges Profil in Gestalt eine dreieckigen Welle aufweist.

5. Lösbare Verbindung nach einem der Ansprüche 2 bis 4, bei der der äußerste freie Rand der geneigten radialen Klappen (18) eine Vielzahl von zahnförmigen Ausnehmungen (20) mit einem höheren Grad von Griffigkeit und Reibung auf der Innenfläche (4) des ersten zu verbindenden Teils (2) umfasst, das das Sackloch (5) umfasst.

6. Lösbare Verbindung nach einem der vorhergehenden Ansprüche, bei der zwischen dem ersten Gewindesegment (6) des Gewindebolzens (7) und der ringförmigen Erweiterung (9) dieses Gewindebolzens (7) ein kurzes Zwischensegment vorhanden ist, das dem Ort der elastischen Beilegscheibe (8) entspricht.

## Revendications

1. Assemblage démontable pour coupler des pièces de grande épaisseur, comportant :
un boulon (7) ayant une première partie avec un premier segment d'extrémité fileté (6), une seconde partie avec un second segment d'extrémité fileté (14), et une extension annulaire intermédiaire (9) entre lesdites première et seconde parties, pour limiter la rotation de serrage du boulon (7),
une première pièce (2) à assembler, pourvue d'une face intérieure (4) et d'un trou borgne fileté (5) relié par vissage au premier segment d'extrémité fileté (6) du boulon (7),
une seconde pièce (1) à assembler, ayant un trou traversant (13) relié au second segment d'extrémité fileté (14) du boulon (7) auquel est couplé un écrou (15), et
des moyens anti-rotation du boulon dans son couplage fileté dans le trou borgne (5) de la première pièce (2), dans lequel lesdits moyens sont constitués d'une pièce intermédiaire (8) couplée au boulon (7),
**caractérisé en ce que**
l'écrou (15) couplé au second segment d'extrémité fileté (14) du boulon (7) est un écrou autobloquant (15),
la seconde pièce (1) à assembler, ayant en outre un espace coaxial (21) défini autour du boulon (7) en correspondance avec les faces intérieures des deux pièces à assembler, et
la pièce intermédiaire (8) couplée au boulon (7) est agencée entre l'extension annulaire intermédiaire (9) du boulon (7) et la face intérieure (4) de la première pièce (2).

2. Assemblage démontable selon la revendication 1, dans lequel la pièce intermédiaire est une rondelle élastique (8) comportant un corps annulaire (16) sur l'une des faces duquel repose l'extension annulaire (9) du boulon (7), plusieurs rabats radiaux inclinés (18) faisant saillie depuis le bord dudit corps annulaire (16), ces rabats (18) étant en appui via leurs bords libres les plus à l'extérieur sur la face intérieure de la première pièce (2) à assembler.

3. Assemblage démontable selon la revendication 2, dans lequel la face de contact du corps annulaire (16) de la rondelle élastique (8) incorpore une surface rugueuse ayant un haut degré de frottement contre l'extension annulaire (9) du boulon (7).

4. Assemblage démontable selon la revendication 3, dans lequel la surface rugueuse de la face de contact de la rondelle élastique (8) présente un profil étroit ayant la forme d'une onde triangulaire.

5. Assemblage démontable selon l'une quelconque des revendications 2 à 4, dans lequel le bord libre le plus à l'extérieur des rabats radiaux inclinés (18) incorpore une pluralité d'encoches en forme de dents (20) avec un degré de prise et de frottement plus élevé sur la face intérieure (4) de la première pièce (2) à assembler qui incorpore le trou borgne (5).

6. Assemblage démontable selon l'une quelconque des revendications précédentes, dans lequel, entre le premier segment fileté (6) du boulon (7) et l'extension annulaire (9) de ce même boulon (7), il existe un court segment intermédiaire qui correspond à l'emplacement de la rondelle élastique (8).
